# EUROPEAN PATENT APPLICATION

(11) **EP 4 742 649 A1**
(43) Date of publication of application: **13.05.2026**
(21) Application number: 24211020.3
(22) Date of filing: 06.11.2024
(51) Int. Cl.: H04N 7/18, H04L 69/28

(54) **INDICATING CLOCK DRIFT OF AN INTERNAL CLOCK IN A SENSOR DEVICE**

(71) Applicant: Axis AB, 223 69 Lund (SE)
(72) Inventor: Storm, Christian, 223 69 LUND (SE); Bank, Andreas, 223 69 LUND (SE)
(74) Representative: AWA Sweden AB

(57) **Abstract**

A method for indicating clock drift of an internal clock comprised in a sensor device, the method comprising: capturing S302, by the sensor device, first data frame; associating S304, by the sensor device, the first data frame with a first point in time indicating a point in time of the internal clock when the first data frame being captured; receiving S306, by the sensor device via a network protocol for clock synchronization, time synchronisation data; determining S308, by the sensor device using the time synchronisation data, a reference point in time indicating a point in time of a reference clock when the first data frame being captured; determining S310, by the sensor device, an offset between the first point in time and the reference point in time; and upon the offset exceeding a threshold offset, associating S312, by the sensor device, the first data frame with data indicating the offset.

## Description

### Technical Field

The present invention relates to networked systems and time synchronization protocols, and in particular to methods, devices and systems for indicating clock drift of an internal clock in a sensor device.

### Background

In modern networked environments, sensor devices such as video cameras, and microphones, and other network-based sensor devices rely heavily on accurate timekeeping to ensure synchronized operations. These devices often utilize network protocols for clock synchronization, which allow them to regularly adjust their internal clocks to match a central time reference. This synchronization is critical for applications that depend on precise timestamping, such as video surveillance and event monitoring.

One widely used protocol for clock synchronization is the Network Time Protocol (NTP). NTP enables devices to periodically adjust their clock frequency to gradually align with the NTP server's time, ensuring that the internal clock time remains accurate over time (i.e., achieves the same time value and average time-ticking speed as the NTP server). NTP and other similar protocols often have specific rules regarding how quickly devices adjust their clocks after detecting a discrepancy to avoid abrupt time shifts. For example, when devices are connected to the synchronization server, they may regularly make small adjustments to their internal clocks employing mechanisms such as slew adjustments, where the clock is gradually corrected over time to align with the server's time.

This poses a problem when a device temporarily loses connection to the synchronization server, which can result from network issues, server downtime, or other interruptions. During this offline period, the sensor device's internal clock may begin to drift away from the correct time provided by the server. This drift can occur if the sensor's real-time clock (RTC) is malfunctioning, causing it to lose precision or accuracy over time. This issue is particularly problematic in applications where precise time alignment is critical, such as video surveillance. For instance, in multi-camera setups, if one or more cameras experience clock drift during a period of disconnection from the synchronization server, their clocks may continue to show different times even after reconnection.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method for indicating clock drift of an internal clock comprised in a sensor device, the method comprising: capturing, by the sensor device, a first data frame; associating, by the sensor device, the first data frame with a first point in time indicating a point in time of the internal clock when the first data frame being captured; receiving, by the sensor device via a network protocol for clock synchronization, time synchronisation data; determining, by the sensor device using the time synchronisation data, a reference point in time indicating a point in time of a reference clock when the first data frame being captured; determining, by the sensor device, an offset between the first point in time and the reference point in time; and upon the offset exceeding a threshold offset, associating, by the sensor device, the first data frame with data indicating the offset.

The present disclosure provides several advantages in indicating clock drift of an internal clock in a sensor device. For example, using the techniques described herein, recording and associating clock drift information with sensor data when the drift exceeds a predefined threshold (such as 0.5, 1, 2, 3, 6, etc., seconds) is facilitated. This ensures that systems implementing the techniques described herein maintains awareness of any significant time discrepancies, which later can be used to reconstruct the actual time of data frames, e.g., for event detection. Such recorded drift information may be thus used when synchronizing sensor data and/or events detected therein between different sensor devices where clock drift may differ. By having access to this drift data, operators, analysis systems, and post-processing tools, such as those used by law enforcement or security agencies, may adjust for time discrepancies and align events across multiple sensor devices, ensuring accurate time-based event reconstruction.

Additionally, using the techniques described herein, data handling may be improved by avoiding the inclusion of unnecessary drift information when the drift is minimal and below the threshold. If the drift is small and insignificant, embedding this information may not provide any meaningful value, and the system can skip recording it. Such selective recording may reduce the overhead in both data storage and transmission, resulting in more efficient use of resources without sacrificing performance. As a result, systems can operate with reduced data load, enhancing their efficiency while still providing essential time correction capabilities when required.

By the term "sensor device" should, in the context of the present disclosure, be understood any device capable of capturing and collecting sensor data (data frames) e.g., being relevant for event detection and monitoring. This includes devices such as cameras that capture visual data, microphones that record audio, motion sensors that detect physical movement, and environmental sensors that measure conditions like temperature, humidity, or pressure. Additionally, lidar and radar systems, which gather spatial data by measuring distances or detecting objects using laser or radio waves, are also considered sensor devices.

By the term "data frame" should, in the context of the present disclosure, be understood a unit of data captured by a sensor device during a specific period in time or at a specific point in time. A data frame may consist of different types of information depending on the sensor, such as an image or video frame from a camera, an audio frame from a microphone, a set of spatial measurements from a lidar or radar system, or a reading from an environmental sensor. Each data frame represents a snapshot of the data captured at a particular moment or during a certain time span.

By the term "network protocol for clock synchronization" should, in the context of the present disclosure, be understood a protocol used to synchronize the internal clocks of devices within a network to a reference clock. Examples include protocols such as the Network Time Protocol (NTP), Precision Time Protocol (PTP), and Network Time Security (NTS). NTS may be used to ensure secure synchronization by protecting the integrity of time data. These protocols regularly transmit "time synchronization data", which refers to the information exchanged, such as timestamps or other time-related details, enabling devices to correct clock drift and maintain accurate synchronization with the reference time of a reference clock reachable via the NTP/NTS/PTP protocol.

In some examples, the sensor device is a network camera, wherein the first data frame is a first image frame, and wherein associating, by the network camera, the first image frame with data indicating the offset comprises adding graphical data visualizing the data indicating the offset to an overlay associated with the first image frame.

Advantageously, using an overlay to visualize clock drift data may provide immediate, intuitive feedback to users or systems analysing the captured data, allowing them to quickly identify the extent of any time discrepancies. Such a visual representation may enhance the efficiency of monitoring and post-event analysis, as the drift information is directly embedded into images frames as an overlay. Moreover, such overlays may be toggleable at the operator side, allowing users to enable or disable the display of clock drift information as needed.

In some examples, associating, by the sensor device, the first data frame with data indicating the offset comprises adding the data indicating the offset as first metadata associated with the first data frame.

Advantageously, by associating the first data frame with offset data as metadata, flexibility for client-side applications to use this information in any way that suits the specific needs of the application may be provided. By embedding the clock drift data as metadata, the integrity of the original sensor data frame may be preserved, allowing the drift information to be processed independently or in combination with the data frame.

In some examples, the first metadata associated with the first data frame is provided as at least one of: data stream metadata, metadata added to a header of the first data frame, or a separate metadata stream. The data stream metadata is metadata embedded directly within a stream of data frames (such as a video or audio stream). For example, for video streams, metadata such as OBU Metadata in AV1, Supplemental Enhancement Information (SEI) in H.26x standards or User Data in MPEG-2 can be used. For audio streams, Event Message (EMSG) boxes for MPEG-DASH audio streams may be used. The metadata can also be provided in the header of the first data frame. In this case, the clock drift information is included in the header portion of the data frame. The header is a part of the data frame that contains information about the frame itself, such as timing, encoding details, or other properties. Adding metadata to the header ensures that it is closely tied to the specific data frame, allowing applications to read this information easily before processing the actual content of the frame. The metadata can also be provided as a separate metadata stream. This approach is common in systems like ONVIF, a protocol for networked sensor devices, which allows metadata to be streamed alongside the main data stream without embedding it directly into the sensor data.

In some examples, the method further comprises determining a signature using sensor data of the first data frame and the first metadata; and integrating the signature into a recording comprising the first data frame and the first metadata.

Incorporating a signature based on both sensor data and metadata may enhance data integrity by ensuring that any tampering with the data would be detectable. This may be advantageous for applications like security and forensic analysis. Additionally, this example may improve traceability by allowing systems to verify the authenticity and origin of the data, ensuring it comes from a trusted source at the specified time. Such a signature may also support legal compliance and validation, providing a tamper-evident record that can be used in legal contexts to confirm the accuracy and integrity of the data.

In some examples, associating, by the sensor device, the first data frame with the first point in time comprises adding the first point in time as second metadata associated with the first data frame. Alternatively, or additionally, the sensor device is a network camera, wherein the first data frame is a first image frame, and wherein associating, by the network camera, the first image frame with the first point in time comprises adding graphical data visualizing the first point in time to an overlay associated with the first image frame. By providing the first point in time, i.e., the point in time of the internal clock when the first data frame is captured, a temporal reference for the data frame is achieved, even in cases where no offset between the internal and reference clocks exists. This guarantees that a timestamp is always available, regardless of clock drift (offset) and how the data indicating the offset is represented. Whether the offset is provided at all, as an actual timestamp or as the calculated difference from the first timestamp, these examples facilitate that timing information remains accurate and consistent.

In some examples, the method further comprises continuously capturing, by the sensor device, data frames; for each captured data frame, associating, by the sensor device, the captured data frame with a further point in time indicating a point in time of the internal clock when the captured data frame being captured.

At predetermined intervals while continuously capturing the data frames, the method may comprise: receiving, by the sensor device via the network protocol for clock synchronization, time synchronisation data; determining, by the sensor device using the time synchronisation data, a further reference point in time indicating a point in time of the reference clock when the latest captured data frame being captured; determining a further offset between the further point in time associated with the latest captured image frame and the further reference point in time; upon the further offset exceeding a threshold offset, associating, by the sensor device, the latest captured data frame with data indicating the further offset.

In these examples, embedding information about the current clock drift (offset) in the recorded video is done at regular intervals, such as once every Group of Pictures (GOP) or every 10 seconds. The method continuously captures data frames and, at predetermined intervals, checks the drift between the internal clock of the sensor device with the reference clock via the network protocol. If a significant offset between the internal clock and the reference clock is detected, exceeding a predefined threshold, this offset is recorded alongside the latest captured data frame, as explained above. Advantageously, time synchronization data does not need to be exchanged continuously, which may reduce the required bandwidth for communication between the sensor device and the reference clock. By only performing clock synchronization at predetermined intervals, network resources may be conserved, and data load may be reduced. Additionally, the processing burden on the sensor device may be reduced, as it does not have to constantly compute and indicate clock drift.

In some examples, the method comprises adjusting the internal clock to reduce the offset, wherein the size of the adjustment is limited by a specification of the network protocol for clock synchronization. Advantageously, by adjusting the internal clock to reduce the offset, where the size of the adjustment is limited by the specification of the network protocol for clock synchronization, gradual synchronization of the internal clock to reduce the offset is facilitated. This may prevent abrupt changes in the internal clock, which could cause data inconsistencies or lead to jitter in time-sensitive applications like video or audio recording. Gradual synchronization ensures smooth time adjustments, reducing the risk of disrupting the normal operation of the sensor device or affecting the continuity of data frames. By adhering to the protocol's limits on clock adjustments, the method also maintains compatibility with industry standards, ensuring reliable and stable performance across various devices and systems.

In some examples, the method further comprises determining, at a device separate from the sensor device, an accurate point in time of the capturing of the first data frame using the first point in time and the data indicating the offset. This allows the separate device (such as a video management system (VMS) or a forensic analysis workstation) to reconstruct the true capture time of the data frame, even when the sensor device's internal clock is out of sync with the reference clock.

In some examples, the method further comprises determining, at the device separate from the sensor device, an accurate point in time of capturing of a second data frame using: a second point in time associated with the second data frame, the second point in time indicating a point in time of the internal clock of the sensor device when the second data frame being captured; and the data indicating the offset associated with the first data frame. Even though not every data frame carries synchronization data, the method may facilitate that an accurate timestamp can be determined for all frames (i.e., also the second frame) based on the offset from the first frame. This may facilitate continuity and precise time alignment across data frames without the need for time synchronization determination for each data frame at the sensor device.

According to a second aspect of the invention, the above object is achieved by a non-transitory computer-readable storage medium having stored thereon instructions for implementing the method according to the first aspect when executed on a camera having processing capabilities.

According to a third aspect of the invention, the above object is achieved by a sensor device configured for indicating clock drift of an internal clock comprised in the sensor device, the sensor device configured for: capturing a first data frame; associating the first data frame with a first point in time indicating a point in time of the internal clock when the first data frame being captured; receiving, via a network protocol for clock synchronization, time synchronisation data; determining, using the time synchronisation data, a reference point in time indicating a point in time of a reference clock when the first data frame being captured; determining an offset between the first point in time and the reference point in time; and upon the offset exceeding a threshold offset, associating the first data frame with data indicating the offset.

According to a fourth aspect of the invention, the above object is achieved by a system comprising the sensor device of the third aspect and a device separate from the sensor device configured for determining an accurate point in time of the capturing of the first data frame by the sensor device using the first point in time and the data indicating the offset.

According to some examples, the device separate from the sensor device is further configured for: determining an accurate point in time of capturing of a second data frame by the sensor device using: a second point in time associated with the second data frame the second point in time indicating a point in time of the internal clock of the sensor device when the second data frame being captured; and the data indicating the offset associated with the first data frame.

The second, third and fourth aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present invention, will be better understood through the following illustrative and non-limiting detailed description of embodiments of the present disclosure, with reference to the appended drawings, where the same reference numerals will be used for similar elements, wherein:
Figure 1 shows a graph over clock drift in a sensor device, according to examples;
Figure 2 shows a system configured to indicate clock drift in a sensor device, according to examples;
Figure 3 shows a flow chart of a method for indicating clock drift of an internal clock comprised in a sensor device, according to embodiments.

### Detailed Description

In time-sensitive applications such as video surveillance, event detection, and multi-sensor systems, maintaining accurate time synchronization across devices is critical. Sensor devices often rely on internal clocks, which can drift over time relative to a reference clock, such as one provided by a Network Time Protocol (NTP) server. This drift can lead to significant time discrepancies in the recorded data when time synchronization is unavailable, potentially affecting event reconstruction, forensic analysis, and multi-sensor synchronization.

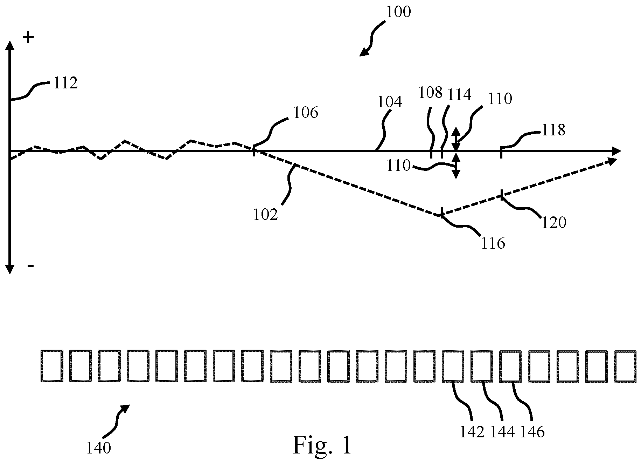

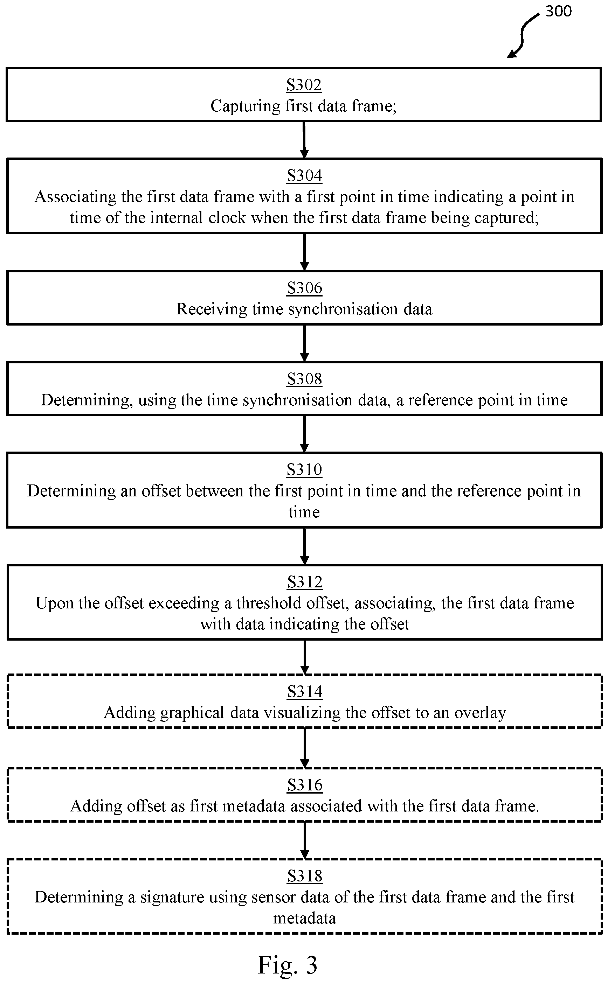

To address these challenges, the present disclosure provides a method and system for managing clock drift in sensor devices by embedding clock drift information in the recorded data. The method involves capturing data frames with a sensor device, and associating the data frames with an offset between the internal clock and a reference clock when the drift exceeds a predefined threshold. As described in conjunction with figures 1-3 below, the techniques described herein may be used to indicate clock drift after periods when the sensor device has lost connection to the reference clock, allowing for accurate reconstruction of event timing even after periods of time when synchronization is temporarily unavailable.

Figure 1 illustrates a graph 100 over clock drift in a sensor device, where the vertical axis 112 represents the clock offset or drift in seconds (both positive and negative), and the horizontal axis represents the time 104 of a reference clock (which obviously remains perfectly synchronized in time, no offset). The dashed line 102 indicates the time of the internal clock of the sensor device, which experiences drift (as indicated by the vertical axis 112) over time relative to the time 104 of the reference clock. The vertical distance between the time 102 of the internal clock and the time 104 of the reference clock at any point in time represents the clock drift or offset at that moment. This offset can be either positive or negative, depending on whether the internal clock is running ahead of or behind the reference clock. The term "offset" thus encompasses both scenarios, where the internal clock is either fast or slow compared to the reference clock.

Figure 1 also illustrates data frames 140 captured by the sensor device during the time period represented by the graph. The alignment of each data frame 140 with the horizontal axis indicates the time of the reference clock at the moment each data frame 140 was captured.

In the left part of the graph, the sensor device is connected to the reference clock, via a network protocol for clock synchronization (NTP, NTS, PTP, etc). As such, the time 102 of the internal clock is substantially synchronized with the time 104 of the reference clock.

During the period of time depicted in the graph, the sensor device is capturing data frames 140, associating each frame with the internal clock's time 102. As long as the time 102 of the internal clock is substantially synchronized with the time 104 of the reference clock, the internal clock's time 102 is sufficient for downstream analysis, such as event reconstruction, forensic analysis, multi-sensor synchronization, etc.

At a certain point in time 106, a disconnection between the sensor device and the reference clock occurs. This could occur if the NTP server goes offline, or if the sensor device loses connection to the NTP server for other reasons, such as a Wi-Fi outage or network instability. This in turn leads to the sensor device operating independently of the network protocol for clock synchronization. As a result, the time 102 of the internal clock begins to drift from the time 104 of the reference clock over time. Since the sensor device is unaware of the drift, due to not being connected to the NTP server, the sensor device keeps on associating each frame with the internal clock's time 102.

At a later point in time 108, the reference clock becomes available to the sensor device again. The sensor device is thus receiving, via a network protocol for clock synchronization, time synchronisation data. The time synchronization data may include timestamps indicating the time of the reference clock, delay information to account for network latency, clock identification to ensure synchronization with the correct reference source, etc. Using the time synchronisation data, the sensor device may then determine reference point in time 114 indicating a point in time of the reference clock when a current/recent data frame 142 being captured. This can then be compared to the (first) point in time 116 indicated by the internal clock 102 when the current/recent data frame 142 being captured. Using the two time stamps 114 and 116, the sensor device can determine an offset between the first point in time 116 and the reference point in time 114. If the offset exceeds a threshold offset 110, whether the offset is positive (indicating that the internal clock is ahead) or negative (indicating that the internal clock is behind), the current/recent data frame 142 is associated with data indicating the size of the offset and also the sign of the offset. Put differently, when the offset exceeds the predefined threshold, whether positive or negative, the system begins associating the captured data frames with metadata indicating the magnitude of the drift and the sign or direction of the drift.

The threshold offset may be 5 seconds, 1 second, or less. Even such small time offsets may be detrimental for time sensitive applications such as applications used in law enforcement investigations, where precise timing is essential for accurate event correlation, decision-making, and synchronization across multiple devices. In law enforcement, for example, even slight timing discrepancies could lead to misaligned evidence, impacting the ability to reconstruct events accurately and potentially affecting the outcome of investigations or legal proceedings.

The threshold-based association ensures that only significant (depending on the context) drift is recorded, reducing unnecessary data overhead when the offset is minimal.

The time 102 of the internal clock is, when connected to the reference clock again, adjusted (in this case the clock frequency is increased) to reduce the offset (e.g., slew adjustment), wherein the size of the adjustment is limited by a specification of the network protocol for clock synchronization. The size of the adjustment may be intentionally small, such as 0.8 ms per second, to ensure that synchronization occurs gradually, avoiding abrupt time jumps that could disrupt ongoing operations like video recording or data analysis. This gradual adjustment helps maintain the continuity of data streams and prevents interruptions or inconsistencies that could arise from sudden clock corrections, ensuring smooth performance in time-sensitive applications. However, such a small adjustment results in that even minor offsets caused by an interruption in the connection with the reference clock may take a substantial amount of time to fully correct. For example, a clock drift of 5 seconds will take over 6,000 seconds (or approximately 1 hour and 40 minutes) to be fully corrected at a rate of 0.8 ms per second.

The sensor device may continuously capture data frames 140. For each frame, such as data frames 142, 144, and 146, the sensor device may associate the captured frame with a corresponding point in time based on the time 102 of the internal clock at the moment of capture. However, the actual determination of the clock offset may only occur at predetermined intervals, rather than for every data frame 140. At these intervals (in figure 1 corresponding to every other data frame 140), the sensor device may receive time synchronization data via the network protocol, as described earlier, allowing it to identify clock drift. For example, the sensor device may determine, using the time synchronisation data, a further reference point in time 118 indicating a point in time of the reference clock when the latest captured data frame 146 being captured. The sensor device may also associate the same captured data frame 146 with a further point in time 120 indicating a point in time of the internal clock when the captured data frame 146 being captured. Using these two time stamps, the sensor device can determine a further offset between the further point in time 120 associated with the latest captured image frame 146 and the further reference point in time 118. As before, upon the further offset exceeding the threshold offset 110, the sensor device can associate the latest captured data frame 146 with data indicating the further offset. However, it should be noted that the offset associated with the captured data frame 146, possibly in combination with the offset associated with the previous data frame 142, may be used to determine the offset of the data frame(s) 144 preceding data frame 146. This means that even if not every data frame 140 has a directly measured offset, a downstream analysis device can interpolate or calculate the offset for intermediate frames 144 based on known offsets from one or more adjacent frames 146, 142. By doing so, the techniques described herein ensure accurate time correction across all frames 140 without the need to record synchronization data for each individual frame.

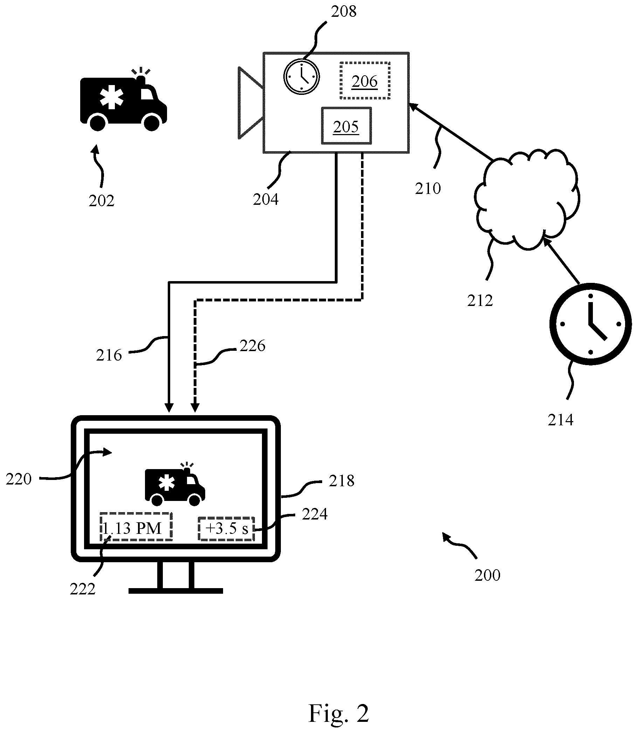

Figure 2 shows a system 200 configured to indicate clock drift in a sensor device 204. Functionalities and techniques implemented in the sensor device 204 will now be described in conjunction with the flow chart of a method 300 for indicating clock drift of an internal clock 208 comprised in the sensor device 204.

In the example of figure 2, the sensor device 204 is a network camera capturing a scene 202, but in other examples, the sensor device 204 may be a microphone, radar, environmental sensor, etc.

The sensor device 204 is configured to capture S302 data frames. In the example of figure 2, the sensor device 204 is capturing S302 image frames depicting the scene 202. In other embodiments, the sensor device is capturing audio frames, lidar/radar frames or any other suitable type of data frames depending on the capabilities of the sensor device 204.

The sensor device 204 comprises the internal clock 208. The sensor device implements functionality, for example in time stamp handling unit 205, for associating S304 a captured data frame (hereinafter referred to as the first data frame) with a first point in time indicating a point in time of the internal clock 208 when the first data frame is captured. The time stamp handling unit 205 may for example handle this process by reading the internal clock 208 when the first data frame is captured, and optionally embedding the timestamp as metadata or as an overlay associated with the first data frame, ensuring each data frame has a clear reference to the time of capture according to the internal clock 208.

The sensor device 204 is connected to a reference clock 214 via a network protocol for clock synchronization 212. Examples of the network protocol 212 include NTS, NTP and PTP as previously discussed. The connection may be either wired or wireless. For example, a wired connection could utilize Ethernet or fibre optics, while wireless options could include technologies such as Wi-Fi, 3G, 4G, or 5G. The sensor device is receiving S306 time synchronisation data 210 via the network protocol for clock synchronization 212.

The sensor device 204, for example the time stamp handling unit 205, may be configured to determine S308, using the time synchronisation data 210, a reference point in time indicating a point in time of the reference clock 214 when the first data frame being captured.

The sensor device 204, for example the time stamp handling unit 205, may further be configured to determine S310 an offset between the first point in time and the reference point in time.

For example, the time stamp handling unit may be configured to calculate the difference between the first point in time and the point in time of the reference clock 214 as determined from the time synchronization data. It is important to note that the time synchronization data 210 may not necessarily arrive at the exact same moment as the first data frame is captured. To handle this, the time stamp handling unit 205 may be designed to account for the timing discrepancy between when the first data frame is captured and when the synchronization data is received, ensuring accurate time alignment. Moreover, the time stamp handling unit 205 may be configured to consider any delay information included in the time synchronization data 210 to account for network latency. By factoring in this latency, the time stamp handling unit 205 can make necessary calculations to determine the reference point in time, ensuring that network delays or arrival time do not distort the accuracy of the synchronization. Once the reference point in time is determined, the time stamp handling unit 205 may proceed to determine S310 an offset between the first point in time (from the internal clock 208) and the reference point in time (from the reference clock 214).

The sensor device, for example the time stamp handling unit 205, may be configured to adjust the internal clock 208 to reduce the offset, wherein the size of the adjustment is limited by a specification of the network protocol for clock synchronization as previously described.

As discussed in conjunction with figure 1, the sensor device, for example the time stamp handling unit 205, may be configured to compare the offset with a threshold offset. If the offset exceeds the threshold offset, the time stamp handling unit 205 may be configured to associate S312 the first data frame with data indicating the offset. The offset data can represent either the actual offset with a sign, indicating the deviation of the sensor's internal clock 208 from the reference clock 214 (with a positive or negative sign depending on whether the sensor's internal clock 208 is ahead or behind), or the actual timestamp of the reference clock 214 as determined to calculate the size of the offset.

In case the first data frame being a first image frame, the sensor device 204, for example the time stamp handling unit 205, may be configured to add S314 graphical data visualizing the data indicating the offset to an overlay associated with the first image frame. Alternatively, or additionally, and irrespective of the format of the first data frame, the time stamp handling unit 205 may be configured to associate S312 the first data frame with data indicating the offset by adding S316 the data indicating the offset as first metadata associated with the first data frame.

In some embodiments, the first metadata may be stored on the sensor device 204, with a reference (e.g., an ID number, hash code, or similar identifier) that links it to the associated data frame or embedded directly within the data frame itself. This stored metadata can be retrieved from the sensor device 204 when needed, such as in cases where the sensor data is required for legal or law enforcement purposes, or in other scenarios where verifying the exact capture time of data frames is critical.

In some embodiments, first metadata associated with the first data frame may be provided as data stream metadata in a data stream 216 transmitted from the sensor device 204. This data stream metadata can include OBU Metadata as defined in the AV1 codec, registered or unregistered Supplemental Enhancement Information (SEI) as specified in H.26x standards, User Data in MPEG-2, VP9 Metadata, or any other suitable video stream metadata format depending on the codec used for encoding. Additionally, if the data frames are audio frames (i.e., audio data), the metadata can be provided in audio-specific data stream formats such as in-band metadata supported by streaming protocols like Extensible Metadata Platform (XMP). The choice of metadata format can vary based on the implementation, codec, or specific requirements of the data frame structure being used.

In some embodiments, first metadata associated with the first data frame may be provided as metadata added to a header of the first data frame by embedding the necessary information, such as time stamps, offsets, etc., directly into the data frame's header structure. This can be accomplished using standard encoding techniques supported by the specific media format or protocol in use (e.g., adding the metadata to the header section of video frames in formats like MPEG or H.264).

In some embodiments, the first metadata associated with the first data frame may be provided as a separate metadata stream 226, such as using the ONVIF (Open Network Video Interface Forum) standard. This means that instead of embedding the metadata directly within the data frame itself (e.g., in the header), the sensor device 204 may transmit the metadata in a parallel stream 226 to the data frame stream 216. ONVIF, commonly used in IP-based video surveillance systems, allows for the transmission of metadata separately from the video or sensor data stream 216, providing flexibility for handling synchronization, time stamps, or event markers.

The sensor device 204 may in some example implement one or both of two methods: either adding the point in time of the internal clock when the first data frame being captured as metadata associated with the first data frame, or, in the case of the sensor device 204 being a network camera, visualizing the point in time of the internal clock when the first data frame being captured in time as graphical data in an overlay on the first image frame. For example, in the first approach, the time stamp of the internal clock 208 can be embedded as metadata in the frame header, just as the offset data would be, allowing downstream systems or applications to extract and use this time information for synchronization and analysis. Similarly, in the second approach, the time stamp of the internal clock 208 can be visually represented in the form of graphical data overlaid on the image frame itself, making it immediately visible to operators or analysts without the need of using custom applications.

In some embodiments, the captured data frames and their associated metadata may be signed by the sensor device 204, for example using a data signing component 206. This signing process may involve generating a digital signature that verifies the authenticity and integrity of both the data frame and its associated metadata, such as time stamps or offset information. By applying a cryptographic signature, the system ensures that any tampering or alteration of the data after it is captured can be detected. This is particularly important in applications like surveillance, law enforcement, or secure data collection, where the integrity of time-stamped data is critical for legal or analytical purposes. The signature can be embedded in the metadata or transmitted as part of a separate data stream, providing a secure means of validating the authenticity of the data during transmission or storage. For example, the data signing component 206 may be configured to determine S318 a signature using sensor data of the first data frame and the first metadata; and integrate the signature into a recording (that can be transmitted 216 or stored) comprising the first data frame and the first metadata. Techniques for determining S318 a signature using sensor data of the first data frame and the first metadata typically involve cryptographic hashing or signing algorithms. The sensor data and metadata may for example be combined and processed through a secure hashing algorithm, such as SHA-256, to generate a unique hash that represents the combined data. This hash can then be signed using a private key through a digital signature algorithm (e.g., RSA or ECDSA), ensuring that any tampering with the data or metadata would invalidate the signature.

In some embodiments, the metadata may also be signed separately (using the techniques described above) and uploaded to a distinct server or database, rather than being included directly in the media recording 216.

In some examples, if protocols such as Network Time Security (NTS) is used to provide the time synchronization data 210, the time stamps in the time synchronization data 210 may be signed by the protocol. By signing the timestamps and time offsets with NTS, the sensor device 204 provides an additional layer of security, verifying not only the integrity of the offset data determined at the sensor device 204 but also verifying the integrity of the time synchronization data 210 used by the sensor device 204 to determine the offset.

The system 200 may further comprise a device 218 separate from the sensor device 204, which can receive the data frames and the associated offset data from the sensor device 204, either via streaming 216, 226 or as part of a recorded file. Such a device may, for example, be a video management system (VMS), a data analysis server, or a cloud-based processing unit. These devices can use the received data 216, 226 for further processing and analysis, such as time alignment across multiple sensor feeds, forensic analysis, or event reconstruction. The separate device 218 may also be responsible for verifying the authenticity of the received data by checking the embedded digital signatures, adjusting for clock drift using the offset metadata, and performing any additional post-processing tasks, such as generating alerts.

The separate device 218 may for example comprise a display for displaying 220 the data frames. Such a display may further display the data indicating the offset and/or the data indicating the time stamp from the internal clock 208. For example, the display may display these datapoints using the overlay(s) associated with the first image frame as discussed above. The separate device 218 may alternatively implement a custom application displaying such data using metadata associated with the first data frame. In any event, the separate device 218 may be configured to determine an accurate point in time of the capturing of the first data frame using the first point in time (i.e., the time stamp from the internal clock 208) and the data indicating the offset. As discussed in conjunction with figure 1, the separate device 218 may be configured to determine an accurate point in time of capturing of a second data frame, using a second point in time associated with the second data frame, the second point in time indicating a point in time of the internal clock of the sensor device when the second data frame being captured; and the data indicating the offset associated with the first data frame.

It should be noted that the division of functionality as described above in conjunction with figure 2, such as the data signing component 206 and the time stamp handling unit 205, is provided by way of example only. Any suitable division or architectural arrangement of the functionality as explained herein may be employed without departing from the scope of the invention. The described components and their functionality may be combined, distributed across multiple units, or implemented in various ways depending on the specific system architecture, hardware capabilities, or application requirements.

The techniques described above can be implemented on a non-transitory computer-readable storage medium having stored thereon instructions for executing the methods discussed herein. When these instructions are executed on one or more devices with processing capabilities, such as general-purpose processors (CPUs), Application-Specific Integrated Circuits (ASICs), Field-Programmable Gate Arrays (FPGAs), or other specialized processing units, the methods for indicating time synchronization, clock drift correction, metadata association, and data integrity verification are performed.

The above embodiments are to be understood as illustrative examples of the invention. Further embodiments of the disclosure are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method (300) for indicating clock drift of an internal clock (208) comprised in a sensor device (204), the method comprising:
capturing (S302), by the sensor device, a first data frame (142);
associating (S304), by the sensor device, the first data frame with a first point in time (116) indicating a point in time of the internal clock when the first data frame being captured;
receiving (S306), by the sensor device via a network protocol for clock synchronization (212), time synchronisation data (210);
determining (S308), by the sensor device using the time synchronisation data, a reference point in time (114) indicating a point in time of a reference clock (214) when the first data frame being captured;
determining (S310), by the sensor device, an offset between the first point in time and the reference point in time; and
upon the offset exceeding a threshold offset (110), associating (S312), by the sensor device, the first data frame with data indicating the offset.

2. The method of claim 1, wherein the sensor device is a network camera, wherein the first data frame is a first image frame, and wherein associating, by the network camera, the first image frame with data indicating the offset comprises:
adding (S314) graphical data (224) visualizing the data indicating the offset to an overlay associated with the first image frame.

3. The method of any one of claims 1-2, wherein associating, by the sensor device, the first data frame with data indicating the offset comprises adding (S316) the data indicating the offset as first metadata associated with the first data frame.

4. The method of claim 3, wherein the first metadata associated with the first data frame is provided as at least one of:
data stream metadata, metadata added to a header of the first data frame, or a separate metadata stream (226);

5. The method of any one of claims 3-4, further comprising:
determining (S318) a signature using sensor data of the first data frame and the first metadata; and
integrating the signature into a recording (216) comprising the first data frame and the first metadata.

6. The method of any one of claims 1-5, wherein associating, by the sensor device, the first data frame with the first point in time comprises:
adding the first point in time as second metadata associated with the first data frame.

7. The method of any one of claims 1-6, wherein the sensor device is a network camera, wherein the first data frame is a first image frame, and wherein associating, by the network camera, the first image frame with the first point in time comprises:
adding graphical data (222) visualizing the first point in time to an overlay associated with the first image frame.

8. The method of any one of claims 1-7, further comprising:
continuously capturing, by the sensor device, data frames (140);
for each captured data frame, associating, by the sensor device, the captured data frame with a further point in time indicating a point in time of the internal clock when the captured data frame being captured;
at predetermined intervals while continuously capturing the data frames:
receiving, by the sensor device via the network protocol for clock synchronization, time synchronisation data;
determining, by the sensor device using the time synchronisation data, a further reference point in time (118) indicating a point in time of the reference clock when the latest captured data frame (146) being captured;
determining a further offset between the further point in time (120) associated with the latest captured image frame and the further reference point in time;
upon the further offset exceeding a threshold offset, associating, by the sensor device, the latest captured data frame with data indicating the further offset.

9. The method of any one of claims 1-8, further comprising:
adjusting the internal clock to reduce the offset, wherein the size of the adjustment is limited by a specification of the network protocol for clock synchronization.

10. The method of any one of claims 1-9, further comprising:
determining, at a device (218) separate from the sensor device, an accurate point in time of the capturing of the first data frame using the first point in time and the data indicating the offset.

11. The method of claim 10, further comprising:
determining, at the device separate from the sensor device, an accurate point in time of capturing of a second data frame (144) using:
a second point in time associated with the second data frame, the second point in time indicating a point in time of the internal clock of the sensor device when the second data frame being captured; and
the data indicating the offset associated with the first data frame.

12. A non-transitory computer-readable storage medium having stored thereon instructions for implementing the method according to any one of claims 1-11 when executed on one or more devices having processing capabilities.

13. A sensor device (204) configured for indicating clock drift of an internal clock (208) comprised in the sensor device, the sensor device configured for:
capturing (S302) a first data frame (142);
associating (S304) the first data frame with a first point in time (116) indicating a point in time of the internal clock (208) when the first data frame being captured;
receiving (S306), via a network protocol for clock synchronization (212), time synchronisation data (210);
determining (S308), using the time synchronisation data, a reference point in time (114) indicating a point in time of a reference clock (214) when the first data frame being captured;
determining (S310) an offset between the first point in time and the reference point in time; and
upon the offset exceeding a threshold offset (110), associating (S312) the first data frame with data indicating the offset.

14. A system (200) comprising the sensor device of claim 13 and a device (218) separate from the sensor device configured for:
determining an accurate point in time of the capturing of the first data frame by the sensor device using the first point in time and the data indicating the offset.

15. The system of claim 14, wherein the device separate from the sensor device is further configured for:
determining an accurate point in time of capturing of a second data frame (144) by the sensor device using:
a second point in time associated with the second data frame the second point in time indicating a point in time of the internal clock of the sensor device when the second data frame being captured; and
the data indicating the offset associated with the first data frame.
